# EUROPÄISCHE PATENTSCHRIFT

(11) **EP 1 526 767 B1**
(45) Veröffentlichungstag und Bekanntmachung des Hinweises auf die Patenterteilung: **26.01.2011**
(21) Anmeldenummer: 03738103.5
(22) Anmeldetag: 01.07.2003
(51) Int. Cl.: A01C 19/00, A01C 15/00

(54) **GETRIEBEANORDNUNG, SÄMASCHINE UND SAATGUTBEHÄLTER MIT EINER SOLCHEN GETRIEBEANORDNUNG**
GEAR ASSEMBLY, SEEDING MACHINE, AND SEED CONTAINER COMPRISING SUCH A GEAR ASSEMBLY
MECANISME DE TRANSMISSION, SEMOIR ET RESERVOIR DE SEMENCES EQUIPES D'UN TEL MECANISME

(30) Priorität: 08.08.2002 US 214968
(43) Veröffentlichungstag der Anmeldung: 04.05.2005
(73) Patentinhaber: DEERE & COMPANY, Moline, Illinois 61265-8098 (US)
(72) Erfinder: FRIESTAD, Michael, Eric, Rock Island, IL 61201 (US)
(74) Vertreter: Holst, Sönke
(86) Internationale Anmeldenummer: PCT/EP2003/006959
(87) Internationale Veröffentlichungsnummer: WO 2004/017713

(56) Entgegenhaltungen:
- WO-A-00/51412
- GB-A- 899 733
- US-A- 2 923 444
- US-A- 4 779 471

## Beschreibung

### Technisches Gebiet

Die Erfindung betrifft eine Getriebeanordnung, für eine landwirtschaftliche Maschine, mit einer flexiblen drehbaren Antriebswelle. Die Antriebswelle enthält ein erstes Verbindungselement. Des Weiteren ist ein Getriebe enthalten, welches einen Zahnradbereich und einen sich außerhalb des Zahnradbereichs erstreckenden und das erste Verbindungselement aufnehmenden Einsteckbereich enthält, wobei der Zahnradbereich einen Getriebeausgang enthält, welcher eine Getriebeantriebsachse definiert und der Einsteckbereich ein zweites Verbindungselement zur Aufnahme des ersten Verbindungselements der flexiblen drehbaren Antriebswelle enthält. Das erste Verbindungselement der flexiblen drehbaren Antriebswelle ist über das Getriebe antreibend mit dem Getriebeausgang gekoppelt, wenn das erste Verbindungselement an das zweite Verbindungselement gekoppelt ist. Des Weiteren ist eine Getriebehalterung enthalten, welche sich äußerlich an der landwirtschaftlichen Maschine zur Aufnahme des Einsteckbereichs des Getriebes erstreckt, um eine Rotation des Getriebes um die Getriebeantriebsachse zu vermeiden. Ferner betrifft die Erfindung eine Sämaschine und einen als Kunststoffbehälter ausgebildeten Saatgutbehälter mit einer Getriebeanordnung.

### Stand der Technik

Flexible drehbare Antriebswellen werden in verschiedenen Anwendungen eingesetzt, um Drehmomente von einem Ort zu einem anderen zu übertragen. Üblicherweise enthalten flexible drehbare Antriebswellen ein steckerförmiges Verbindungselement, um in ein buchsenförmiges Verbindungselement an einem Getriebe einzugreifen. Wenn das steckerförmige Verbindungselement in einer in das buchsenförmige Verbindungselement eingerückten Stellung ist, steht die flexible drehbare Antriebswelle in einer antreibenden Verbindung zu dem Getriebe. Das Getriebe wird entgegen Rotationsbewegungen festgehalten, indem es durch Montagebolzen an eine Rahmenstruktur gesichert wird. Die Sicherung des Getriebes an der Rahmenstruktur durch Montagebolzen ist mit einem erheblichen Montageaufwand verbunden.

Die GB 899 733 A offenbart eine Sämaschine mit einem eine flexible Antriebswelle aufweisenden Getriebe. Das Gehäuse des Getriebes wird gegen Rotationsbewegungen mittels einer am Rahmen der Sämaschine angebrachten Halterung gesichert.

Die US 718 664 A und die US 4 779 471 A offenbaren den Einsatz von flexiblen drehbaren Antriebswellen bei landwirtschaftlichen Sämaschinen. Die dort offenbarten flexiblen Antriebswellen erstrecken sich von einem bodengetriebenen Rad zu einer Dosiervorrichtung. Das bodengetriebene Rad ist an ein Getriebe für den Antrieb der flexiblen Antriebswelle gekoppelt. Die flexible Antriebswelle wiederum treibt ein Dosiervorrichtungsgetriebe zum Antrieb einer Dosiervorrichtung an.

### Aufgabe der Erfindung

Die der Erfindung zu Grunde liegende Aufgabe wird darin gesehen, eine Getriebeanordnung der eingangs genannten Art anzugeben, durch welches die vorgenannten Probleme überwunden werden.

### Beschreibung der Erfindung

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist in einer Getriebeanordnung der eingangs genannten Art eine Getriebehalterung vorhanden, welche zwei Haltearme enthält, und der Einsteckbereich zwischen den beiden Haltearmen eingepasst.

Für den Antrieb einer Dosiervorrichtung einer Sämaschine wird eine flexible Antriebswelle eingesetzt. Die Sämaschine ist mit einem Dosiervorrichtungsgetriebe versehen. Das Dosiervorrichtungsgetriebe enthält einen Einsteckbereich für die flexible drehbare Antriebswelle und einen Zahnradbereich. Der Zahnradbereich ist mit einem Getriebeausgang versehen, welcher eine Getriebeantriebsachse definiert. Der Getriebeausgang ist zum Antreiben der Dosiervorrichtung antreibend mit der Dosiervorrichtung gekoppelt. Der Einsteckbereich für die flexible drehbare Antriebswelle erstreckt sich außerhalb des Zahnradbereichs zur Aufnahme der Antriebshülse der flexiblen drehbaren Antriebswelle. Die Getriebehalterung enthält zwei Haltearme, welche parallel zu der Getriebeantriebsachse ausgerichtet sind. Der Einsteckbereich für die flexible drehbare Antriebswelle ist zwischen den Haltearmen eingepasst zur Verhinderung einer Rotation des Getriebes.

### Beschreibung der Zeichnungen

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht einer Sämaschine mit einer einzelnen Pflanzeinheit von hinten,
- Fig. 2: eine Querschnittsansicht eines Getriebes und einer drehbaren Antriebswelle, wobei sich die Antriebswelle in ihrer eingerückten Stellung befindet,
- Fig. 3: eine perspektivische Ansicht des Getriebes und der Getriebehalterung von vorn und
- Fig. 4: eine Frontansicht der Getriebehalterung.

### Detaillierte Beschreibung zur Ausführung der Erfindung

Eine Sämaschine 10 enthält eine einzelne Reihensäeinheit, welche mittels U-förmiger Schrauben, die mit einer Montageplatte 12 in Eingriff stehen, an einen querliegenden Werkzeugträger (nicht gezeigt) montiert ist. Die Säeinheit ist mit einem Rahmen 14 versehen, der über ein Parallelogrammgestänge 16 an die Montageplatte 12 gekoppelt ist. Das Parallelogrammgestänge 16 erlaubt ein begrenztes Heben und Senken der Säeinheit relativ zum Werkzeugträger. Durch ein pneumatisches bedarfsgesteuertes Saatgutabgabesystem wird automatisch Saatgut zu der Säeinheit geleitet. Das bedarfsgesteuerte Saatgutabgabesystem leitet das Saatgut pneumatisch von einem Hauptbehälter (nicht gezeigt) durch eine Saatgutleitung 18 zu einen auf dem Rahmen 14 montierten Hilfsbehälter 20. Das im Hilfsbehälter 20 befindliche Saatgut wird mittels einer Dosiervorrichtung 22 dosiert und durch ein Saatgutrohr in eine Säfurche geleitet (nicht gezeigt).

Die Säfurche wird durch einen Doppelscheiben-Furchenöffner 24 mit Tiefeneinstellrädern 26 geformt. Die Tiefe der Säfurche wird durch Positionierung des Hebels 28 eingestellt, mit dem die vertikale Position der Tiefeneinstellräder 26 relativ zum Furchenöffner 24 regulierbar ist. Die Säfurche mit dem durch das Saatgutrohr darin abgelegten dosierten Saatgut wird mittels Furchenschließrädern 30 geschlossen. Ein davor montiertes Scheibensech 32 dient zur Zerkleinerung von Pflanzenrückständen bevor diese auf den Furchenöffner 24 treffen.

Die Dosiervorrichtung 22 wird durch eine flexible drehbare Antriebswelle 40, welche ein Getriebe 42 antreibt, angetrieben. Die flexible und drehbare Antriebswelle 40 entspricht einer Ausführung, wie sie von der Elliot Manifacturing Company, LLC, Bermingham, New York hergestellt und vermarktet wird. Ein durch Bodenhaftung angetriebenes Getriebe (nicht gezeigt) liefert ein Eingangsdrehmoment an die flexible Antriebswelle 40. Auf diese Weise wird die Drehzahl der Dosiervorrichtung 22 durch die Fahrgeschwindigkeit der Sämaschine 10 gesteuert. Die flexible drehbare Antriebswelle 40 enthält eine flexible Ummantelung und einen drehbaren inneren Kern. Das Ende der flexiblen drehbaren Antriebswelle 40 ist mit einem steckerförmigen Verbindungselement 44 versehen, welches eine Einsteckhülse 46 und ein mit einer planen Fläche versehenes drehbares Antriebssteckelement 48 enthält. Die Einsteckhülse 46 ist als Metallbuchse ausgebildet, wobei die Metallbuchse eine erste Umfangsnut 50 und eine zweite Umfangsnut 52 enthält. Zwischen den beiden Umfangsnuten 50, 52 ist eine O-Ring-Dichtung 54 positioniert.

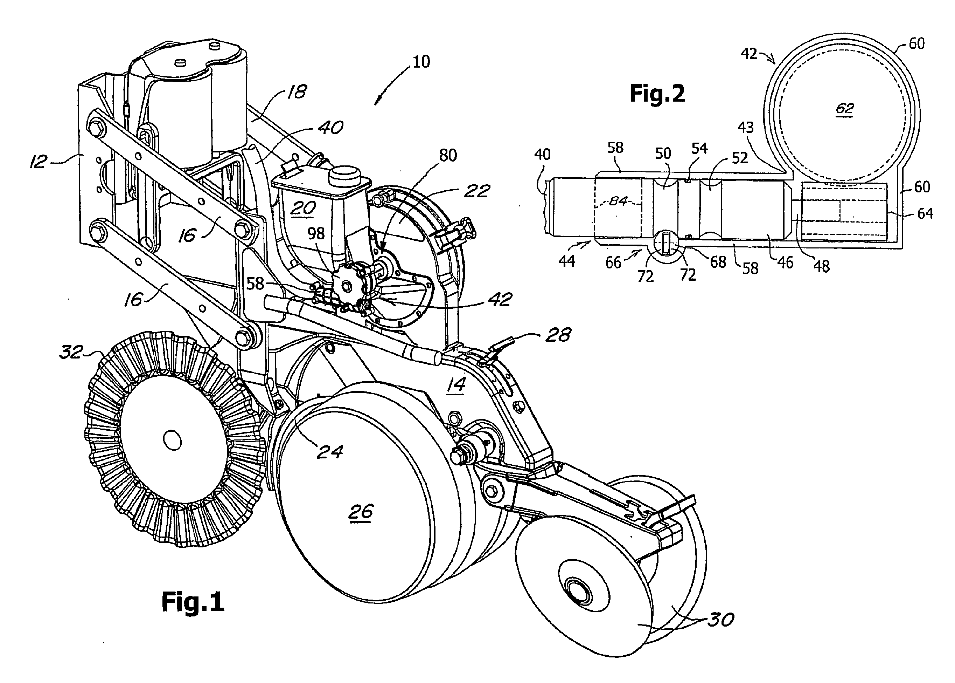

Das Getriebe 42 enthält ein Getriebegehäuse 43 mit einem Einsteckbereich 58, der die Einsteckhülse 46 aufnimmt und einem Zahnradbereich 60, der Zahnräder 62, 64 aufnimmt. In dem Zahnradbereich 60 des Gehäuses 43 sind zwei schrägverzahnte Zahnräder 62, 64 montiert. Das erste schrägverzahnte Zahnrad 62 ist durch ein Antriebselement 80 antreibend mit der Dosiervorrichtung 22 gekoppelt. Das zweite schrägverzahnte Zahnrad 64 ist antreibend mit dem ersten schrägverzahnten Zahnrad 62 gekoppelt. Das zweite schrägverzahnte Zahnrad 64 ist mit einer mehrkantigen Bohrung versehen, welche das Antriebssteckelement 48 der flexiblen drehbaren Antriebswelle 40 aufnimmt. Wenn die Antriebswelle 40 in ihrer eingerückten Stellung ist, wie es in Fig. 2 dargestellt wird, wird das zweite schrägverzahnte Zahnrad 64 von der flexiblen drehbaren Antriebswelle 40 angetrieben.

Der zylindrische Einsteckbereich 58 ist mit einer Arretiervorrichtung 66 versehen, welche einen querverlaufenden Bolzen 68 enthält. In dem in Figur 1 bis 2 dargestellten Ausführungsbeispiel ist der Bolzen 68 drehbar in einer Querbohrung positioniert, die sich im Einsteckbereich 58 des Getriebegehäuses 43 befindet. Der Bolzen 68 enthält ein erstes Ende, mit zwei Greifflächen 72 zum Erfassen durch einen Bediener. Um den Bolzen 68 zwischen einer Sperrstellung und einer Freigabestellung zu bewegen, greift ein Bediener an die Greifflächen 72, drückt den Bolzen 68 nach innen, und dreht ihn dann in die gewünschte Stellung.

Die Einsteckhülse 46 bildet das steckerförmige Verbindungselement, welches in das durch den Einsteckbereich 58 des Getriebes 42 ausgebildete buchsenförmige Verbindungselement eingreift. Die erste Umfangsnut 50 definiert die vollständig eingerückte Stellung der flexiblen drehbaren Antriebswelle 40. In der vollständig eingerückten Stellung ist die flexible drehbare Antriebswelle 40 antreibend mit dem Getriebe 42 zum Antrieb der Dosiervorrichtung 22 verbunden. Die zweite Umfangsnut 52 definiert die teilweise ausgerückte Stellung der flexiblen drehbaren Antriebswelle 40. In der teilweise ausgerückten Stellung ist die flexible drehbare Antriebswelle 40 an den Einsteckbereich 58 des Getriebegehäuses 43 gekoppelt, aber nicht antreibend an das zweite schrägverzahnte Zahnrad 64 gekoppelt.

Für ein manuelles Drehen der Dosiervorrichtung 22 ist ein Bedienungsknauf 98 am Getriebe 42 montiert. Zusätzlich kann dieser Knauf dazu genutzt werden, das zweite schrägverzahnte Zahnrad 64 derart zu bewegen, dass es das Antriebssteckelement 48 erfasst, wenn dieses in das Getriebegehäuse 43 hineingesteckt wird.

Sobald das Zahnrad 62 durch die flexible Antriebswelle 40 angetrieben wird, versucht das Getriebe 42, um die Getriebeantriebsachse zu drehen. Um diese Drehung zu verhindern, ist der Saatgutbehälter 20 mit einer Getriebehalterung 80 versehen. Die Getriebehalterung 80 erstreckt sich nach außen von der Sämaschine 10 und enthält zwei Haltearme 82, 84. Die beiden Haltearme 82, 84 sind parallel zu der Getriebeantriebsachse ausgerichtet. Die beiden Haltearme 82, 84 verhindern die Drehung des Getriebes 42 sowohl im Uhrzeigersinn als auch entgegen des Uhrzeigersinns um die Getriebeantriebsachse.

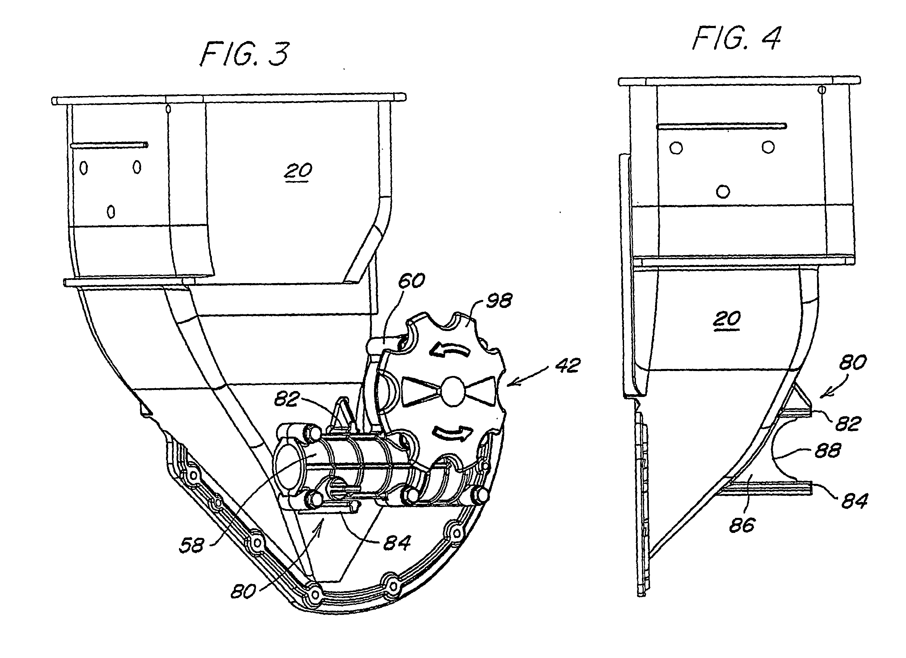

Das Getriebegehäuse 43 und der Behälter 20 sind aus Kunststoff gefertigt. Die Haltearme 82, 83 sind ein Bestandteil des Behälters 20 und an den Behälter 20 angegossen. Wie in Fig. 4 gezeigt ist, erstreckt sich ein Steg 86 zwischen den Haltearmen 82, 84. Der Steg 86 enthält einen bogenförmigen Rand 88, um an den zylindrischen Einsteckbereich 58 angepasst zu sein. Auch wenn die Getriebehalterung als eine an den Behälter 20 angegossene Ausführung dargestellt wird, kann es sich auch um ein gesondertes Element handeln, welches an die Sämaschine montiert wird.

## Patentansprüche

1. Getriebeanordnung, für eine landwirtschaftliche Maschine (10), mit einer flexiblen drehbaren Antriebswelle (40), welche ein erstes Verbindungselement (44) enthält, einem Getriebe (42), welches einen Zahnradbereich (60) und einen sich außerhalb des Zahnradbereichs (60) erstreckenden und das Verbindungselement (44) aufnehmenden Einsteckbereich (58) enthält, wobei der Zahnradbereich (60) einen Getriebeausgang (63) enthält, welcher eine Getriebeantriebsachse definiert und der Einsteckbereich (58) ein zweites Verbindungselement zur Aufnahme des ersten Verbindungselements (44) der flexiblen drehbaren Antriebswelle (40) enthält und wobei das Verbindungselement (44) der flexiblen drehbaren Antriebswelle (40) über das Getriebe (42) antreibend mit dem Getriebeausgang (63) gekoppelt ist, wenn das erste Verbindungselement (44) an das zweite Verbindungselement gekoppelt ist, und einer Getriebehalterung (80), welche sich äußerlich an der landwirtschaftlichen Maschine (10) zur Aufnahme des Einsteckbereichs (58) des Getriebes (42) erstreckt, um eine Rotation des Getriebes (42) um die Getriebeantriebsachse zu vermeiden, **dadurch gekennzeichnet, dass** die Getriebehalterung (80) zwei Haltearme (82, 84) enthält und der Einsteckbereich (58) zwischen den beiden Haltearmen (82, 84) eingepasst ist.

2. Getriebeanordnung nach Anspruch 1, **dadurch gekennzeichnet, dass** die Haltearme (82, 84) über einen Steg (86) miteinander verbunden sind.

3. Getriebeanordnung nach einem oder mehreren der vorhergehenden Ansprüche, **dadurch gekennzeichnet, dass** die Haltearme (82, 84) und der Steg (86) ein Teil eines Behälters (20) auf der landwirtschaftlichen Maschine (10) sind.

4. Getriebeanordnung nach einem oder mehreren der vorhergehenden Ansprüche, **dadurch gekennzeichnet, dass** der Behälter (20) aus Kunststoff ausgebildet ist und die Haltearme (82, 84) und der Steg (86) an den Behälter (20) angegossen sind.

5. Getriebeanordnung nach einem oder mehreren der vorhergehenden Ansprüche, **dadurch gekennzeichnet, dass** der Einsteckbereich (58) zylindrisch ausgebildet ist und der Steg (86) einen bogenförmigen Rand enthält, um den Einsteckbereich (58) aufzunehmen.

6. Sämaschine (10) zum Pflanzen von Getreide, mit einem Rahmen (14), einem an den Rahmen (14) montierten Saatgutbehälter (20), einer an den Rahmen montierten Dosiervorrichtung (22) zur Dosierung von in dem Behälter (20) aufgenommenen Saatgut, einem an den Rahmen (14) montierten Furchenöffner (24) zur Ausbildung einer Saatfurche auf einem Feld, in welche von der Dosiervorrichtung (22) dosiertes Saatgut geleitet wird, und einer Getriebeanordnung gemäß einem oder mehreren der vorhergehenden Ansprüche.

7. Sämaschine (10) nach Anspruch 6, **dadurch gekennzeichnet, dass** sich die Getriebehalterung (80) äußerlich an dem Saatgutbehälter (20) erstreckt.

8. Saatgutbehälter zur Aufnahme von Saatgut für eine Sämaschine (10), wobei der Saatgutbehälter (20) als Kunststoffbehälter ausgebildet ist, **dadurch gekennzeichnet, dass** zwei Getriebe-Haltearme (82, 84) enthalten sind, welche sich äußerlich am Kunststoffbehälter (20) erstrecken und mit dem Kunststoffbehälter (20) vergossen sind, wobei eine Getriebeanordnung nach einem oder mehreren der Ansprüche 1 bis 5 vorhanden ist.

9. Saatgutbehälter nach Anspruch 8, **dadurch gekennzeichnet, dass** die Haltearme (82, 84) über einen Steg (86) miteinander verbunden sind, wobei der Steg (86) ebenfalls mit dem Kunststoffbehälter (20) vergossen ist.

## Claims

1. Gear assembly, for an agricultural machine (10), with a flexible, rotatable drive shaft (40) which contains a first connecting element (44), a gear (42) which contains a gearwheel region (60) and a plug-in region (58) which extends outside the gearwheel region (60) and receives the connecting element (44), wherein the gearwheel region (60) contains a gear output (63) which defines a gear drive axis, and the plug-in region (58) contains a second connecting element for receiving the first connecting element (44) of the flexible, rotatable drive shaft (40), and wherein the connecting element (44) of the flexible, rotatable drive shaft (40) is coupled to the gear output (63) in a driving manner via the gear (42) when the first connecting element (44) is coupled to the second connecting element, and a gear mount (80) which extends externally on the agricultural machine (10) for receiving the plug-in region (58) of the gear (42), in order to avoid rotation of the gear (42) about the gear drive axis, **characterized in that** the gear mount (80) contains two holding arms (82, 84) and the plug-in region (58) is fitted between the two holding arms (82, 84).

2. Gear assembly according to Claim 1, **characterized in that** the holding arms (82, 84) are connected to each other via a web (86).

3. Gear assembly according to one or more of the preceding claims, **characterized in that** the holding arms (82, 84) and the web (86) are part of a container (20) on the agricultural machine (10).

4. Gear assembly according to one or more of the preceding claims, **characterized in that** the container (20) is formed from plastic, and the holding arms (82, 84) and the web (86) are cast onto the container (20).

5. Gear assembly according to one or more of the preceding claims, **characterized in that** the plug-in region (58) is of cylindrical design, and the web (86) contains a curved edge in order to receive the plug-in region (58).

6. Seeding machine (10) for planting cereal, with a frame (14), a seed container (20) mounted on the frame (14), a metering device (22) which is mounted on the frame and is intended for metering seed held in the container (20), a furrow opener (24) which is mounted on the frame (14) and is intended for forming a seed furrow on a field, into which seed metered by the metering device (22) is guided, and a gear assembly according to one or more of the preceding claims.

7. Seeding machine (10) according to Claim 6, **characterized in that** the gear mount (80) extends externally on the seed container (20).

8. Seed container for holding seed for a seeding machine (10), wherein the seed container (20) is in the form of a plastic container, **characterized in that** there are two gear holding arms (82, 84) which extend externally on the plastic container (20) and are cast together with the plastic container (20), with a gear assembly according to one or more of Claims 1 to 5 being provided.

9. Seed container according to Claim 8, **characterized in that** the holding arms (82, 84) are connected to each other via a web (86), the web (86) likewise being cast together with the plastic container (20).

## Revendications

1. Agencement de transmission pour une machine agricole (10), comprenant un arbre d'entraînement rotatif flexible (40), qui contient un premier élément de connexion (44), une transmission (42), qui contient une région de roue dentée (60) et une région d'insertion (58) s'étendant en dehors de la région de roue dentée (60) et recevant l'élément de connexion (44), la région de roue dentée (60) contenant une sortie de transmission (63), qui définit un axe d'entraînement de transmission et la région d'insertion (58) contenant un deuxième élément de connexion pour recevoir le premier élément de connexion (44) de l'arbre d'entraînement rotatif flexible (40) et l'élément de connexion (44) de l'arbre d'entraînement rotatif flexible (40) étant accouplé par entraînement à la sortie de transmission (63) par le biais de la transmission (42), quand le premier élément de connexion (44) est accouplé au deuxième élément de connexion, et une fixation de transmission (80), qui s'étend à l'extérieur sur la machine agricole (10) pour recevoir la région d'insertion (58) de la transmission (42), afin d'éviter une rotation de la transmission (42) autour de l'axe d'entraînement de transmission, **caractérisé en ce que** la fixation de transmission (80) contient deux bras de fixation (82, 84) et la région d'insertion (58) est insérée entre les deux bras de fixation (82, 84).

2. Agencement de transmission selon la revendication 1, **caractérisé en ce que** les bras de fixation (82, 84) sont connectés l'un à l'autre par le biais d'une partie droite (86).

3. Agencement de transmission selon l'une quelconque ou plusieurs des revendications précédentes, **caractérisé en ce que** les bras de fixation (82, 84) et la partie droite (86) font partie d'un réservoir (20) sur la machine agricole (10).

4. Agencement de transmission selon l'une quelconque ou plusieurs des revendications précédentes, **caractérisé en ce que** le réservoir (20) est réalisé en plastique et les bras de fixation (82, 84) et la partie droite (86) sont moulés sur le réservoir (20).

5. Agencement de transmission selon l'une quelconque ou plusieurs des revendications précédentes, **caractérisé en ce que** la région d'insertion (58) est cylindrique et la partie droite (86) contient un bord de forme courbe, afin de recevoir la région d'insertion (58).

6. Semoir (10) pour planter des graines, comprenant un châssis (14), un réservoir de semences (20) monté sur le châssis (14), un dispositif de dosage (22) monté sur le châssis en vue de doser les semences reçues dans le réservoir (20), un dispositif d'ouverture de sillons (24) monté sur le châssis (14) pour réaliser un sillon dans un champ, à l'intérieur duquel sont guidées les semences dosées par le dispositif de dosage (22), et un agencement de transmission selon l'une quelconque ou plusieurs des revendications précédentes.

7. Semoir (10) selon la revendication 6, **caractérisé en ce que** le support de transmission (80) s'étend à l'extérieur sur le réservoir de semences (20).

8. Réservoir de semences destiné à recevoir des semences pour un semoir (10), le réservoir de semences (20) étant réalisé sous forme de réservoir en plastique, **caractérisé en ce que** deux bras de fixation de transmission (82, 84) sont prévus, lesquels s'étendent à l'extérieur sur le réservoir en plastique (20) et sont moulés avec le réservoir en plastique (20), un agencement de transmission selon l'une quelconque ou plusieurs des revendications 1 à 5 étant prévu.

9. Réservoir de semences selon la revendication 8, **caractérisé en ce que** les bras de fixation (82, 84) sont connectés l'un à l'autre par le biais d'une partie droite (86), la partie droite (86) étant également moulée avec le réservoir en plastique (20).
